# EUROPÄISCHE PATENTSCHRIFT

(11) **EP 1 001 637 B1**
(45) Veröffentlichungstag und Bekanntmachung des Hinweises auf die Patenterteilung: **12.01.2011**
(21) Anmeldenummer: 99122457.7
(22) Anmeldetag: 11.11.1999
(51) Int. Cl.: H04Q 3/42

(54) **Telekommunikations-Vermittlungsanlage**
Telecommunications exchange
Commutateur de télécommunication

(30) Priorität: 12.11.1998 DE 19852130
(43) Veröffentlichungstag der Anmeldung: 17.05.2000
(73) Patentinhaber: Tenovis GmbH & Co. KG, 60362 Frankfurt am Main (DE)
(72) Erfinder: Haack, Reiner, 60486 Frankfurt/Main (DE)
(74) Vertreter: Walkenhorst, Andreas

(56) Entgegenhaltungen:
- EP-A- 0 539 105
- DE-C1- 19 535 540
- US-A- 5 185 786
- US-A- 5 537 470

## Beschreibung

### Stand der Technik

Die Erfindung betrifft eine Telekommunikations-Vermittlungsanlage mit einer Mehrzahl von Anschlüssen, die zum Verbinden mit Endgeräten oder Amtsleitungen vorgesehen sind, wobei die Anlage jedem auf einem der Anschlüsse eintreffenden Anruf einen Identifikator zuordnet und anhand des Identifikators auf einem angerufenen Anschluß eintreffende Information an den anrufenden Anschluß weiterleitet.

Bei dieser Information kann es sich um Signalisierungsinformation oder um Nutzdaten, zum Beispiel Sprach- oder EDV-Daten handeln. Derartige Vermittlungsanlagen sind bekannt und kommen zum Beispiel in sogenannten Call-Centern zum Einsatz, in denen eine große Anzahl von auf Amtsleitungen eintreffenden Anrufen an eine begrenzte Zahl von Endgeräten weitervermittelt werden müssen, die in der Lage sind, die eintreffenden Anrufe zu bearbeiten, wie etwa die Telefonapparate von Mitarbeitern des Call-Centers.

Die meisten Anrufe, die über Amtsleitungen bei ei - nem solchen Call-Center eintreffen, richten sich nicht an ein spezifisches, an die Vermittlungsanlage angeschlossenes Endgerät und können deshalb mit einem beliebigen Endgerät verbunden werden.

Dabei ergibt sich häufig die Situation, daß auf einer Amtsleitung ein Anruf eintrifft, während alle Endgeräte, die in der Lage sind, ihn entgegenzunehmen, bereits besetzt sind. Um zu vermeiden, daß in einer solchen Situation ein über eine Amtsleitung kommender Anrufer ein Besetztzeichen zu hören bekommt und möglicherweise eine große Zahl vergeblicher Versuche unternehmen muß, bevor er mit einem der Mitarbeiter sprechen kann, sind an eine solche Vermittlungsanlage häufig eine Anzahl von automatischen Endgeräten angeschlossen, die nicht in der Lage sind, vom Anrufer kommende Nutzdaten zu empfangen, sondern deren einzige Funktion es ist, dem Anrufer ein Freizeichen zu signalisieren oder eine Ansage abzuspielen, und den Anruf an einen Telefonapparat weiterzuvermitteln, sobald einer freigeworden ist.

Diese Lösung hat eine Reihe von Nachteilen. Zum einen belegt jedes der automatischen Endgeräte einen Anschluß der Vermittlungsanlage. Deshalb sind, wenn solche Geräte eingesetzt werden, große Vermittlungsanlagen mit einer großen Zahl von Anschlüssen erforderlich, wobei diese Anschlüsse aber nur zum Teil für Amtsleitungen oder Telefonapparate nutzbar sind, zum anderen muß, um eine einwandfreie Weitervermittlung von auf den automatischen Endgeräten "geparkten" Anrufen zu gewährleisten, entweder die Vermittlungsanlage genau wissen, an welchen ihrer Anschlüsse solche automatischen Endgeräte angeschlossen sind, und diese in anderer Weise verwalten als solche Anschlüsse, an denen Telefonapparate hängen, oder die automatischen Endgeräte müssen laufend Anforderungen an die Vermittlungsanlage senden, damit die von ihnen gehaltenen Anrufe weitervermittelt werden. Wenn mehrere automatische Endgeräte gleichzeitig Anrufe halten, wird die Vermittlungsanlage mit einer großen Zahl von Vermittlungsanforderungen belastet. Eine solche Anlage muß jedes Mal umprogrammiert werden, wenn zum Beispiel eines der automatischen Endgeräte gegen einen Telefonapparat ausgetauscht wird, was regelmäßig vorkommt, wenn sich zum Beispiel die Zahl der Mitarbeiter eines Call-Centers vergrößert.

Solches System ist zum Beispiel offenbart im Dokument DE 195 35 540 C1.

### Vorteile der Erfindung

Die Telekommunikations-Vermittlungsanlage wie in Anspruch 1 definiert benötigt keine automatischen Endgeräte, um in einer Situation, in der alle angeschlossenen Telefonapparate besetzt sind, ankommende Anrufe entgegenzunehmen und sie nach einer Wartezeit mit dem nächsten freiwerdenden Telefonapparat zu verbinden. Die Anschlüsse der Vermittlungsanlage sind deshalb sämtlich entweder für Amtsleitungen oder für Endgeräte wie etwa Telefonapparate nutzbar, die einen ankommenden Anruf tatsächlich entgegennehmen und verarbeiten können. Die Funktion der automatischen Endgeräte wird von einem Speicher der Vermittlungsanlage übernommen, in den für jeden eintreffenden Anruf, der nicht mit einem Endgerät verbunden werden kann, weil diese alle besetzt sind, ein Datensatz aufgezeichnet wird, der zumindest einen Identifikator des Anrufs umfaßt. Bei diesem Identifikator kann es sich um eine Nummer handeln, die jedem Anschluß der Vermittlungsanlage eindeutig zugeordnet ist. Wenn ein Endgerät frei wird, vermittelt die Anlage den durch den Datensatz identifizierten Anruf an dieses Endgerät weiter und übermittelt von dem Endgerät zurückgegebene Daten anhand des Identifikators an den anrufenden Anschluß.

Vorzugsweise schaltet die Vermittlungsanlage jedem Anruf, der durch Eintragen eines Datensatzes in den Speicher "geparkt" ist, ein Freizeichen oder eine. Ansage an. Dabei kann eine dieser beiden Möglichkeiten durch den Hersteller der Anlage fest vorgegeben sein, es kann aber auch für den Betreiber der Anlage die Möglichkeit vorgesehen sein, zwischen beiden Alternativen zu wählen, da es je nach Anwendung vorzuziehen sein kann, ein Freizeichen zurückzugeben und so den Anruf für den Anrufer gebührenfrei zu halten, oder eine Ansage anzuschalten, um den Anrufer davon in Kenntnis zu setzen, daß sein Anruf registriert worden ist und sobald wie möglich entgegengenommen wird.

Zweckmäßigerweise verfolgt eine Überwachungsschaltung das Freiwerden der an die Vermittlungsanlage angeschlossenen Endgeräte und ist in der Lage, bei Freiwerden eines Endgeräts die Verbindung eines Anrufs, zu dem ein Datensatz im Speicher eingetragen ist, mit diesem Endgerät zu veranlassen.

Wenn über eine Amtsleitung oder von einem direkt an die Vermittlungsanlage angeschlossenen Endgerät ein Anruf eintrifft, der ein bestimmtes Endgerät spezifiziert, so kann dieser Anruf in unterschiedlicher Weise verarbeitet werden. Gemäß einer ersten Alternative kann in einem solchen Fall, wenn das spezifizierte Endgerät nicht erreichbar ist, ein Datensatz für den Anruf im Speicher eingetragen werden, der eine Information über das spezifizierte Endgerät enthält. In einem solchen Fall wird der "geparkte" Anruf nur dann weiter verbunden, wenn das spezifizierte Endgerät frei geworden ist.

Da in einem solchen Fall aber die Wartezeit voraussichtlich länger ist, als wenn auf das Freiwerden eines beliebigen Endgeräts gewartet wird, kann es zweckmäßiger sein, in einem solchen Fall keine Eintragung eines Datensatzes im Speicher vorzunehmen. In einem solchen Fall wird dem Anruf zweckmäßigerweise sofort ein Besetztzeichen angeschaltet, wenn das spezifizierte Endgerät belegt ist.

Da bei der erfindungsgemäßen Vermittlungsanlage keine Anschlüsse für automatische Endgeräte vorgehalten werden müssen, können bei dieser Anlage mehr als die Hälfte ihrer Anschlüsse an Amtsleitungen angeschlossen sein, ohne daß dies zu Kapazitätsengpässen führen kann.

Weiter Merkmale und Vorteile der Erfindung ergeben sich aus der nachfolgenden Beschreibung von Ausführungsbeispielen.

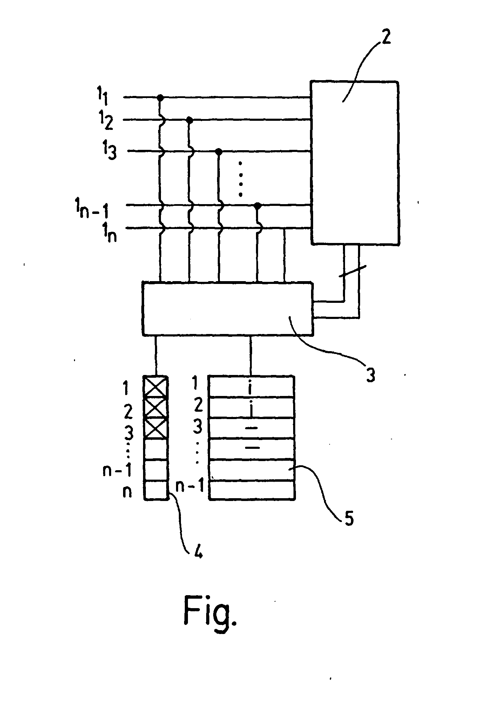

Die einzige Figur zeigt ein schematisches Blockschaltbild einer erfindungsgemäßen Telekommunikations-Vermittlungsanlage.

Die Vermittlungsanlage umfaßt eine Mehrzahl n von Anschlüssen 1₁ bis 1ₙ, die über eine Verbindungseinheit 2 zu mehreren jeweils paarweise verbindbar sind, um Daten zu übertragen. Ein Teil der Anschlüsse 1 ist mit Amtsleitungen verbunden, die übrigen mit Endgeräten wie etwa Telefonapparaten, aber auch Fax- oder EDV-Geräten, die in der Lage sind, einen eintreffenden Anruf zu verarbeiten, das heißt Netzdaten zu empfangen und/oder an einen Anrufer zu senden.

Eine Überwachungsschaltung 3, die zweckmäßigerweise programmgesteuert ist, überwacht den Status frei oder besetzt jedes einzelnen Anschlusses. Die Überwachungsschaltung ist mit einem Register 4 verbunden, in dem jedem Anschluß ein Eintrag zugeordnet ist, welcher angibt, ob dem betreffenden Anschluß eine Amtsleitung oder ein direkt an die Vermittlungsanlage angeschlossenes Endgerät zugeordnet ist, oder ob der betreffende Anschluß nicht belegt ist. Wenn es sich um einen direkten Endgeräteanschluß handelt, kann das Register ferner Informationen über dessen Amtszugangsberechtigung enthalten.

Wenn auf einem der Anschlüsse 1₁ bis 1ₙ ein Anruf eintrifft, ermittelt die Überwachungsschaltung 3 anhand des Registers 4, ob es sich um einen externen Anruf über eine Amtsleitung oder einen internen Anruf handelt. Wenn der Anruf auf einer Amtsleitung eintrifft, überprüft die Überwachungsschaltung 3, ob der Anruf ein bestimmtes internes Endgerät spezifiziert oder nicht. Wenn kein Endgerät spezifiziert ist, überprüft die Überwachungsschaltung 3, ob ein Anschluß zu einem internen Gerät frei ist und weist die verbindungseinheit 2 an, den Anruf mit dem freien Endgerät zu verbinden. Falls mehrere Endgeräte frei sind, kann die Überwachungsschaltung 3 eines von ihnen auswählen, zum Beispiel nach einem zufälligen Schlüssel, oder der Anruf kann zunächst allen freien Endgeräten signalisiert werden, wobei die Gesprächsverbindung mit demjenigem Endgerät zustande kommt, das zuerst antwortet.

Wenn kein Endgerät frei ist, trägt die Überwachungsschaltung 3 einen Identifikator, zum Beispiel die Nummer des Anschlusses, an dem der Anruf eingetroffen ist, in einen Speicher 5 ein. Gleichzeitig wird in Abhängigkeit von dem von der Überwachungsschaltung 3 ausgeführten Steuerprogramm dem Anruf entweder ein Freizeichen oder eine Ansage angeschaltet. Die Überwachungsschaltung 3 verfolgt fortlaufend den Status der Anschlüsse, die direkt mit den Geräten verbunden sind, und sobald sie feststellt, daß einer dieser Anschlüsse freigeworden ist, weist sie die Verbindungseinheit 2 unter Weitergabe des abgespeicherten Identifikators an, den Anschluß, der dem Identifikator entspricht, mit dem freigewordenen Endgeräteanschluß zu verbinden. Der dem Anruf entsprechende Eintrag in Speicher 5 wird daraufhin gelöscht.

Falls beim Eintreffen eines Anrufs bereits ein oder mehrere früher eingetroffene Anrufe im Speicher 5 eingetragen sind, wird für den hinzugekommenen ein neuer Datensatz im Speicher 5 angelegt, und beim Freiwerden eines Endgeräts wird der jeweils älteste der Datensätze ausgewählt, und der entsprechende Anruf mit dem freigewordenen Endgerät verbunden. Zu diesem Zweck kann der Speicher 5 als "FIFO" organisiert sein, alternativ kann jeder Datensatz eine Information über den Zeitpunkt des Eintreffens des entsprechenden Anrufs enthalten.

Wenn der auf einer Amtsleitung eintreffende Anruf durch eine Durchwahlnummer ein bestimmtes Endgerät spezifiziert, mit dem eine Verbindung hergestellt werden soll, so kann in Abhängigkeit von dem von der Überwachungsschaltung 3 ausgeführten Steuerprogramm in unterschiedlicher Weise verfahren werden. Gemäß einer ersten Variante wird dem Anruf ein Besetztzeichen angeschaltet, wenn das gewählte Gerät besetzt ist. Alternativ kann in dem Datensatz, den die Überwachungsschaltung für den eintreffenden Anruf im Speicher 5 einträgt, eine Angabe aufgenommen werden, die das gewünschte Endgerät spezifiziert. In diesem Fall wird die Verbindung zum spezifizierten Endgerät hergestellt, sobald dieses frei geworden ist. Eine weitere Alternative ist die, den Datensatz einschließlich der Angabe des gewünschten Endgeräts im Speicher 5 abzuspeichern, den Anruf aber nach einer bestimmten Wartezeit mit einem beliebigen freien Endgerät zu verbinden.

Anrufe, die von einem direkt angeschlossenen Endgerät kommen und für ein direkt angeschlossenes Endgerät bestimmt sind, also "hausinterne" Gespräche, werden zweckmäßigerweise in herkömmlicher Weise verarbeitet, indem dem Gespräch immer dann ein Besetztzeichen angeschaltet wird, wenn das gewünschte Endgerät besetzt ist.

Anrufe, die von einem direkt angeschlossenen Endgerät herrühren und eine Amtsleitung verlangen, werden in analoger Weise wie von einer Amtsleitung kommende Anrufe verarbeitet: Wenn eine Amtsleitung frei ist, veranlaßt die Überwachungsschaltung 3 die Verbindungseinheit 2 sofort, den anrufenden Anschluß mit der Amtsleitung zu verbinden. Steht keine Amtsleitung zur Verfügung, so wird der Anruf mit Identifikator in den Speicher 5 in der gleichen Weise wie ein auf einer Amtsleitung eintreffender Anruf eingetragen. In diesem Fall wird dem Anruf erst dann ein Wählzeichen angeschaltet, wenn die Amtsleitung zur Verfügung steht.

Das Programm, das die Steuerung der Überwachungseinheit 3 versieht, kann zum Eintragen und Auslesen von Datensätzen unmittelbar auf den Speicher 5 zugreifen. Gemäß einer Variante, die die Integration der Erfindung in bestehende Vermittlungsanlagen erleichtert, kann zum Parken von Anrufen auch ein logisches Endgerät implementiert sein, das vom Programm durch eine eigene Rufnummer in der gleichen Weise wie ein real existierendes Endgerät, also zum Beispiel ein Telefonapparat, angesprochen wird, und immer dann, wenn ein eintreffender Anruf nicht an einen freien Anschluß, egal ob Endgerät oder Amtsleitung, weitervermittelbar ist, die zum Einrichten des Datensatzes im Speicher 5 die notwendigen Daten übergeben bekommt. An dieses logische Endgerät können so viele Anrufe gleichzeitig weitergegeben sein, wie Platz für Datensätze im Speicher 5 zur Verfügung steht.

Die Überwachungseinheit 3 kann die mit dem logischen Endgerät verbundenen beziehungsweise dort "geparkten" Anrufe bei Freiwerden eines Anschlusses selbsttätig weitervermitteln. Alternativ sendet das logische Endgerät regelmäßig Anforderungen an die Überwachungseinheit, geparkte Anrufe weiterzuvermitteln. Die Häufigkeit dieser Anforderungen ist nicht abhängig von der Zahl der geparkten Anrufe, so daß eine unnötige Belastung der Vermittlungsanlage durch nicht erfüllbare Vermittlungsanforderungen vermieden wird.

Die Verarbeitung eintreffender Anrufe ist somit für alle Anschlüsse 1₁ bis 1ₙ weitgehend gleich, unabhängig davon, ob diese mit einer Amtsleitung oder direkt mit einem Endgerät verbunden sind. Dies macht die erfindungsgemäße Vermittlungsanlage sehr flexibel; insbesondere ist es ohne weiteres möglich, sie so zu konstruieren, daß später ein Benutzer durch Programmieren der Überwachungsschaltung 3 festlegen kann, ob ein gegebener Anschluß eine Amtsleitung oder ein Endgerät versorgen soll.

Da die Vermittlungsanlage kein automatisches Endgerät zum "Parken" von Anrufen benötigt, können alle zur Verfügung stehenden Anschlüsse für Endgeräte wie Telefonapparate etc. oder für Amtsleitungen benutzt werden, so daß ein Benutzer der Anlage mit einer geringeren Anzahl von Anschlüssen auskommt als bei den bekannten Anlagen. Dies verringert die Komplexität und damit die Kosten der Verbindungseinheit 2.

Da die Überwachungsschaltung nicht zwischen automatischen Endgeräten zum Parken von Anrufen einerseits und Amtsleitungen und sonstigen Endgeräten andererseits unterscheiden muß, und da die Verwaltung von Endgeräte- und Amtsleitungsanschlüssen im wesentlichen die gleiche ist, ist auch die Steuerung der Vermittlungsanlage vereinfacht.

## Patentansprüche

1. Telekommunikations-Vermittlungsanlage mit einer Mehrzahl von Anschlüssen (1_{I},.....1ₙ) für Endgeräte oder Amtsleitungen, welche jedem auf einem der Anschlüsse (1_{I},.....1ₙ) eintreffenden Anruf einen Identifikator zuordnet und anhand des Identifikators aus einem angerufenen Anschluss eintreffende Information an den anrufenden Anschluss weiterleitet, wobei die Vermittlungsanlage einen Speicher (5) aufweist, in den für jeden eintreffenden und nicht mit einem angerufenen Anschluss verbundenen Anruf ein Datensatz eintragbar ist, der wenigstens den Identifikator des Anrufs umfasst, **dadurch gekennzeichnet, dass** in dem Fall, in dem kein Endgerät spezifiziert ist, der Datensatz im Speicher (5) eingetragen wird und in dem Fall, in dem ein Endgerät spezifiziert ist,
dem Anruf kein Datensatz im Speicher zugeordnet wird.

2. Vermittlungsanlage nach Anspruch 1, **dadurch gekennzeichnet, dass** sie dem ein Endgerät spezifizierenden Anruf ein Besetztzeichen anschaltet, wenn das spezifizierte Endgerät belegt ist.

3. Vermittlungsanlage nach einem der vorhergehenden Ansprüche, **dadurch gekennzeichnet, dass** mehr als die Hälfte ihrer Anschlüsse an Amtsleitungen angeschlossen sind.

## Claims

1. A telecommunications exchange system having a plurality of ports (1₁, ...... 1ₙ) for terminals or exchange lines, which associates an identifier with each call arriving on any of the ports (1₁, ...... 1ₙ) and forwards, by means of the identifier, information arriving from a called port to the calling port, said exchange including a memory (5) in which a data record can be entered for each arriving call not connected with the called port, said data record comprising at least the identifier of the call, **characterized in that** the data record will be entered in the memory (5), if no terminal is specified, and **in that** no data record will be associated with the call in the memory, if a terminal is specified.

2. The telecommunications exchange system of claim 1, **characterized in that** it connects a busy signal to the call specifying a terminal, if the specified terminal is busy.

3. The telecommunications exchange system of any of the preceding claims, **characterized in that** more than half of its ports are connected to exchange lines.

## Revendications

1. Système de central de télécommunication ayant une pluralité de ports (1₁, ...... 1ₙ) pour des terminaux ou des lignes réseau, qui attribue un identificateur à chaque appel arrivant à un des ports (1₁, ...... 1ₙ) et achemine, au moyen de l'identificateur, des informations arrivant d'un port appelé, au port appelant, dit système de central comprenant une mémoire (5) dans laquelle une phrase de données peut être entrée pour chaque appel arrivant qui n'est pas mis en communication avec le port appelé, dite phrase de données comprenant au moins l'identificateur de l'appel, **caractérisé en ce que** la phrase de données sera entrée dans la memoire (5), si aucun terminal n'est spécifié, et **en ce qu'**aucune phrase de données sera attribué à l'appel, dans la mémoire, si un terminal est spécifié.

2. Système de central de télécommunication selon la revendication 1, **caractérisé en ce qu'**il passe un signal d'occupation à l'appel spécifiant un terminal, si le terminal spécifé est occupé.

3. Système de central de télécommunication selon l'une quelconque des revendications précédentes, **caractérisé en ce que** plus de la moitié de ses ports sont mis en communication avec des lignes réseau.
